# EUROPEAN PATENT SPECIFICATION

(11) **EP 1 207 061 B1**
(45) Date of publication and mention of the grant of the patent: **24.03.2004**
(21) Application number: 01127307.5
(22) Date of filing: 19.11.2001
(51) Int. Cl.: B60C 13/00, G06K 7/00

(54) **Apparatus for the identification and maintenance of tyres and wheels with tyres**
Wartungs- und Identifizierungsgerät für Reifen und Räder mit Reifen
Dispositf d'entretien et d'identification pour pneus et roues avec pneus

(30) Priority: 20.11.2000 IT VR000115
(43) Date of publication of application: 22.05.2002
(73) Proprietor: BUTLER ENGINEERING & MARKETING S.r.l., 42010 Rio Saliceto (Reggio Emilia) (IT)
(72) Inventor: Gonzaga, Tullio, 42015 Correggio (Reggio Emilia) (IT)
(74) Representative: Reniero, Cirillo Silvano

(56) References cited:
- EP-A- 0 875 365
- US-A- 3 781 798
- US-A- 3 991 620
- US-A- 5 442 549

## Description

The present invention relates to an equipment suitable for the identification and maintenance of tyres and vehicle wheels with tyres.

For some years the large tyre manufacturers have been putting on the market tyres with microchips or identification bar codes or other identification codes for the purposes of semi-automated warehouse stock management and shipping.

US-A- 3 781 798 discloses an equipment for the identification of tyres and wheels with tyres including a sensing device having a plurality of sensing fingers each of which is individually displaced in response to depressions or elevations which each particular encounters while the sensing device is moved over characters composing a code.

The main object of the present invention is to provide equipment suitable for the identification and maintenance of tyres and wheels with tyres that is suitable for taking advantage of the presence of chips or identification codes in a tyre to provide the operator maintaining the tyres, typically at a tyre centre, with a whole range of s information such as the year of manufacture of a tyre, the number of times it has been inflated, what loads the tyre has been subjected to, its ideal pressure and other information and technical features regarding the tyre so as to put the operator in a position to make informed decisions when carrying out his maintenance work on the tyre, or in making the choice to replace the tyre.

Another object of the present invention is to provide an apparatus or equipment for the maintenance of tyres and wheels with tyres that has a tyre identification device that is easy to use even by operators that are rot specially trained.

These and other objects that shall better appear below are attained by an equipment as recited in claim 1. that really exists but is not stored in memory, in which case, if desired, the code read is displayed on the display 5 or whether it is an absence of code on the tyre P, in which case the wording "no code" or such like would be displayed to bring the operator's attention to this fact.

If it is desired to enter a new code or other information in memory 3, keyboard 7 is used which through the decoder 6 and line 6a detects whether the data already exist in memory, data that, if it is so wished, can be displayed on the monitor 5, whereas through a line 6b it stores new numerical and alphabetic data in the memory 3.

As is schematically illustrated in the Figures 2 to 4, the device 1 can be easily and advantageously installed on a tyre mounting and dismounting machine 10 (Fig. 2), an inflation cage (Fig. 3) and/or a wheel balancing machine 12 (Fig. 4) for wheels with tyres so that the operator can be informed on site and in real time of the actual construction characteristic featrures of the tyre as well as any "history" regarding the tyre P that is being worked on (such as its date of manufacture, the date it was mounted on the wheel, the number of times it has already been inflated, the ideal or recommended inflating pressure, the type of material that would be most suitable if it were necessary to repair the tyre, any repair procedures to be followed, and so forth).

This is not, however, all. As a tyre worker will be aware, when tyre manufacturers decide to put a new type of tyre onto the market, if the tyre centres have equipment 10, 11, 12 with a device according to the present invention, they need no longer incur delay costs due to the need to inform and properly train tyre workers (tyremen) far in advance as it is enough just to update the various machines throughout the geographical area, e.g. by means of Internet through a suitable web connection 9, entering in memories 3 and providing new data and instructions relating to the new type of tyre for prompt and effective updating for the operators engaged in tyre maintenance work.

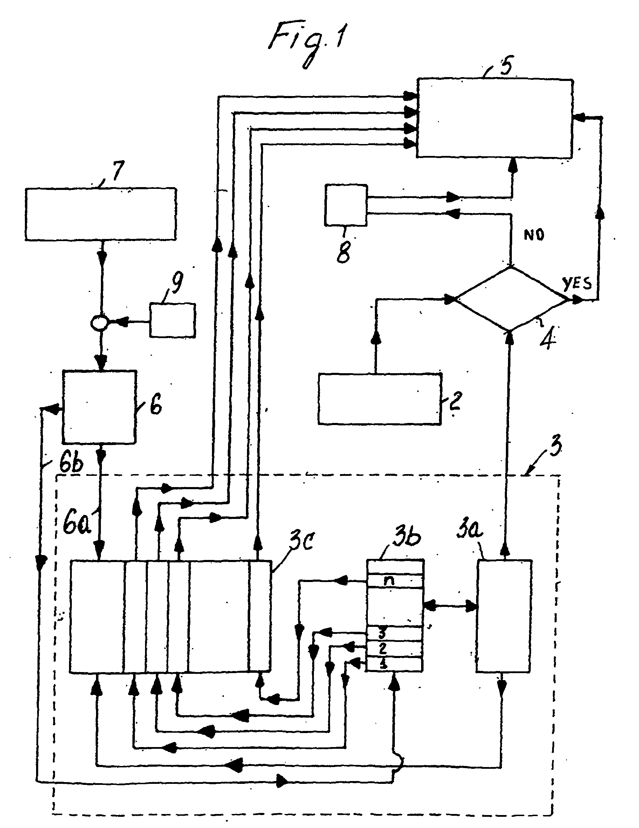

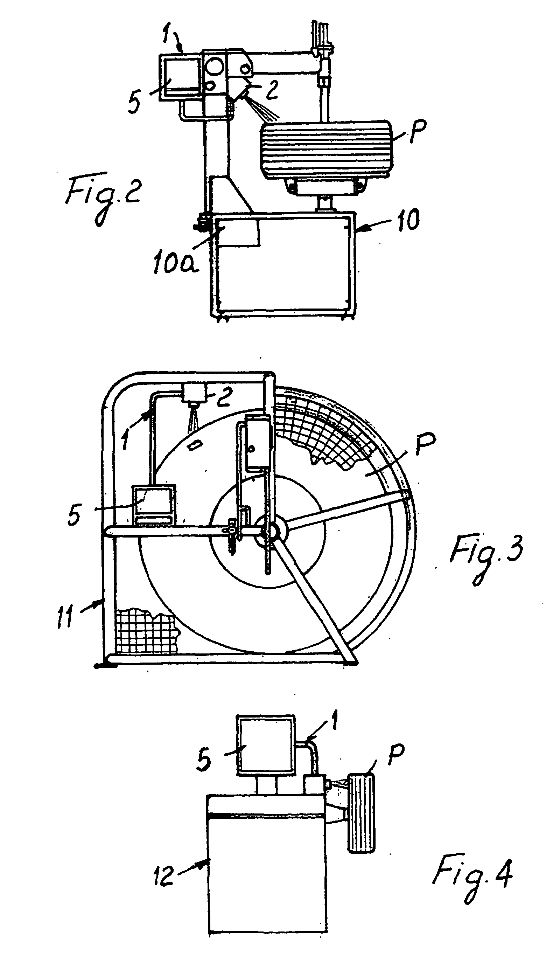

It will be noted that with equipment designed according to the present invention it is possible:
- to carry out updates of the data in memory on the one hand by means of the keyboard 7 in the form of the manual entering of new codes or by the addition of data in memory 3 after maintenance work has been carried out on a determined tyre so checks can then be carried out by a chip inserted into the tyre to update the tyre after maintenance work has been carried out on that tyre and, on the other hand, by connecting the maintenance machines to the network for updating machines scattered over large areas about new types of tyres, instructions for their use and so forth;
- for the equipment to act as an active guide for a tyre mounting and dismounting machine where it is suitably fitted with mounting and dismounting stress sensors, e.g. a sensor 10a (Fig. 2) that monitors electrical current absorption, in the case of an electric motor, or the pressure of the air supplied, in the case of a pneumatic motor, thus running a control on the degree of stresses to which the tyre is subjected during the maintenance operations;
- for automatically driving the equipment, e.g. a tyre mounting and dismounting machine by having the machine carry out all or some of the tyre mounting and/or dismounting operations in an automated manner or through the use of robots.

The above described invention is susceptible to numerous modifications and variations within the scope of the claims.

## Claims

1. Equipment for the identification and maintenance of tyres and wheels with tyres including a machine (10, 11, 12) for tyre maintenance work having a tyre identification or recognition device (1), at least one code detector (2), at least one data memory (3) regarding the codes and data on predetermined types of tyre, at least one comparator circuit (4) suitable for comparing a code detected by said code detecting device (1) with the codes stored in said memory (3), and at least one display device (5) for the displaying of information data regarding an identified tyre (P), **characterized in that** said identification device (1) comprises at least one access means (7) to said memory (3), a decoder (6) between the or each access means and the said memory (3) for storing data and codes in said memory (3) and their being displayed on said display device (5).

2. Equipment according to claim 1, **characterized in that** the or each display device (5) is connected to the or each comparator circuit (4).

3. Equipment according to claim 1 or 2, **characterized in that** it comprises a discriminator means (8) between an output of said comparator circuit (4) and said display device (5).

4. Equipment according to any claim 1 to 3, **characterized in that** it comprises a tyre moulting and dismounting machine (10).

5. Equipment according to any claim 1 to 3, **characterized in that** it comprises an inflating station (11).

## Patentansprüche

1. Einrichtung für die Identifizierung und Wartung von Reifen und von mit Reifen versehenen Rädern, die umfasst: eine Maschine (10, 11, 12) für eine Reifenwartungsarbeit, die eine Reifenidentifizierungsoder Reifenerkennungsvorrichtung (1) aufweist, wenigstens einen Codedetektor (2), wenigstens einen Datenspeicher (3) für die Codes und für Daten über vorgegebene Reifentypen, wenigstens eine Komparatorschaltung (4), die einen von der Codedetektorvorrichtung (1) erfassten Code mit den im Speicher (3) gespeicherten Codes vergleichen kann, und wenigstens eine Anzeigevorrichtung (5), die Informationsdaten bezüglich eines identifizierten Reifens (P) anzeigt, **dadurch gekennzeichnet, dass** die Identifizierungsvorrichtung (1) wenigstens ein Mittel (7) für den Zugriff auf den Speicher (3) und einen Decodierer (6) zwischen dem oder jedem Zugriffsmittel und dem Speicher (3) zum Speichern von Daten und Codes in dem Speicher (3) und zum Anzeigen von Daten und Codes auf der Anzeigevorrichtung (5) umfasst.

2. Einrichtung nach Anspruch 1, **dadurch gekennzeichnet, dass** die oder jede Anzeigevorrichtung (5) an die oder jede Komparatorschaltung (4) angeschlossen ist.

3. Einrichtung nach Anspruch 1 oder 2, **dadurch gekennzeichnet, dass** sie ein Unterscheidungsmittel (8) zwischen einem Ausgang der Komparatorschaltung (4) und der Anzeigevorrichtung (5) umfasst.

4. Einrichtung nach einem der Ansprüche 1 bis 3, **dadurch gekennzeichnet, dass** sie eine Reifenmontage- und Reifendemontage-Maschine (10) umfasst.

5. Einrichtung nach einem der Ansprüche 1 bis 3, **dadurch gekennzeichnet, dass** sie eine Aufpumpstation (11) umfasst.

## Revendications

1. Equipement pour l'identification et l'entretien de bandages pneumatiques et des roues équipées de bandages pneumatiques, comprenant une machine (10, 11, 12) pour le travail d'entretien de bandages pneumatiques munie d'un dispositif (1) d'identification ou de reconnaissance de bandages pneumatiques, au moins un détecteur (2) de code, au moins une mémoire (3) de données concernant les codes et les données sur des types prédéterminés de bandages pneumatiques, au moins un circuit comparateur (4) apte à comparer un code détecté par ledit dispositif (1) de détection de code avec les codes stockés dans ladite mémoire (3), et au moins un dispositif d'affichage (5) l'affichage des données d'information concernant un bandage pneumatique identifié (P), **caractérisé en ce que** ledit dispositif d'identification (1) comprend au moins un moyen d'accès (7) à ladite mémoire (3), un décodeur (6) entre le ou chaque moyen d'accès et ladite mémoire (3) pour stocker des données et des codes dans ladite mémoire (3) et permettre leur affichage sur ledit dispositif d'affichage (5).

2. Equipement selon la revendication 1, **caractérisé en ce que** le ou chaque dispositif d'affichage (5) et relié au ou à chaque circuit comparateur (4).

3. Equipement selon la revendication 1 ou 2, **caractérisé en ce qu'**il comprend des moyens discriminateurs (8) entre une sortie dudit circuit comparateur (4) et ledit dispositif d'affichage (5).

4. Equipement selon l'une quelconque des revendications 1 à 3, **caractérisé en ce qu'**il comprend une machine (10) de montage et de démontage de bandages pneumatiques.

5. Equipement selon l'une quelconque des revendications 1 à 3, **caractérisé en ce qu'**il comprend un poste (11) de gonflage.
